# EUROPEAN PATENT APPLICATION

(11) **EP 4 596 202 A1**
(43) Date of publication of application: **06.08.2025**
(21) Application number: 23870955.4
(22) Date of filing: 27.09.2023
(51) Int. Cl.: B29B 9/14, B29B 9/02

(54) **PHYSICAL RECYCLING METHOD AND SYSTEM FOR FINISHED TEXTILE PRODUCTS, AND PROCESSING MATERIAL MANUFACTURED THEREBY**

(30) Priority: 27.09.2022 WO PCT/CN2022/121523
(71) Applicant: Ho Yu Textile Co., Ltd., Taoyuan City 328005 (TW)
(72) Inventor: JWO, Chinglun, Taoyuan City Taiwan 328005 (TW); TSAI, Chinchung, Taoyuan City Taiwan 324403 (TW)
(74) Representative: Müller Hoffmann & Partner
(86) International application number: PCT/CN2023/122167
(87) International publication number: WO 2024/067728

(57) **Abstract**

The present disclosure provides a method for physical recycling and reutilization of textile products, including: a preparation step: providing a recycled textile product; a shredding step: shredding the recycled textile product at a rotational speed of 400-1000 rpm to form a shredded material; a fusion step: subjecting the shredded material to stretching and shearing, and preliminarily fusing the shredded material to form a fused material; a melting step: forming the fused material into a molten material under a high temperature and a high pressure; a forming step: rolling the molten material into a sheet; and a filtration step: heating and melting the sheet, then filtering out impurities from the melted sheet through a filter mesh to form a processed material.

## Description

The present application claims the priority to International Patent Application No. PCT/CN2022/121523, filed on September 27, 2022, entitled "METHOD AND SYSTEM FOR PHYSICAL RECYCLING AND REUTILIZATION OF TEXTILE PRODUCTS AND PROCESSED MATERIALS MANUFACTURED THEREBY," the contents of which are hereby incorporated herein fully by reference into the present application for all purposes.

### FIELD

The present disclosure relates to a recycling and reutilization of waste textile products, and more specifically, to a method for physical recycling and reutilization of various textile products.

### BACKGROUND

For a long time, the plastic textile processing industry has faced challenges in fully separating bonded materials for recycling. When fabric (e.g., nylon, polyester, cotton) is combined with plastic (e.g., PVC, TPE, TPU, TPO, EVA, PU), complete separation for recycling proves difficult. Without separation, the regenerative value of these materials remains low, and most materials end up being treated as waste.

Currently, there are two primary methods for recycling textiles. The first is chemical recycling, which involves using chemical processes to treat waste textiles. These processes rely on chemical reactions, resulting in high production costs and complex procedures. Common chemical recycling methods include: (1) removing plastic components, such as polyurethane, from textiles through chemical treatment to obtain fabric without plastic content for further processing; (2) for textiles that do not contain plastic materials, chemical depolymerization is used to remove dyes and additives, thus restoring the fabric to a pure state before further processing.

However, chemical recycling consumes significant amounts of energy and increases the carbon emission of the product.

The second method is physical recycling, which involves mechanically breaking down textiles into fibers for reuse. However, classification remains a challenge.

Currently, only waste textiles made from a single material could be recycled. If a textile contains composite functional materials bonded with adhesives or lamination, physical recycling methods are not viable. This is because recycled textiles consist of various fiber types, dyes, and coatings, making their physical and chemical properties highly complex. The dominant material in a recycled textile is referred to as the primary material, while materials in smaller proportions are considered impurities. These impurities create stress concentration points within the primary material, significantly weakening its physical properties and increasing the likelihood of breakage or defects (e.g., reduced waterproofing). As a result, additional specialized treatment is required to process such diverse recycled textiles.

With growing environmental awareness, energy conservation, carbon reduction, and the efficient recycling and reuse of waste textiles have become pressing global concerns.

### SUMMARY

Considering this problem, the present disclosure introduces a method for the physical recycling and reutilization of textile products. This method efficiently transforms waste textiles into processed materials through physical recycling and reutilization, without relying on chemical depolymerization methods, while also effectively reducing carbon emission throughout the process.

The first aspect of the present disclosure provides a method for physical recycling and reutilization of textile products. The physical recycling and reutilization method includes: a preparation step, providing a recycled textile product, the recycled textile product that includes a fabric material and a plastic material; a shredding step, shredding the recycled textile product at a rotational speed from 400 rpm to 1000 rpm to form a shredded material; a fusion step, subjecting the shredded material to stretching and shearing, and fusing the shredded material to form a fused material; a melting step, stirring the fused material under a pressure from 1500 kgf to 3000 kgf and at a temperature from 120°C to 230°C for 3 minutes to 30 minutes to form a molten material; a forming step, rolling the molten material into a sheet; and a filtration step, heating and melting the sheet, then filtering out impurities from the melted sheet through a filter mesh to form a processed material.

In one implementation of the first aspect, the shredding step may further include removing impurities generated during shredding the recycled textile product through a mechanical vibrating sieve and a magnet, and the impurities include metal.

In another implementation of the first aspect, the shredded material may have an area of 0.08 cm²-8cm².

In another implementation of the first aspect, the melting step may include adding a first material, and the first material is identical to the plastic material in the recycled textile product.

In another implementation of the first aspect, a mixing device may fuse the shredded material at a temperature from 120°C to 230°C and under a pressure from 10 kgf to 50 kgf.

In another implementation of the first aspect, the forming step may include a color adjustment of the molten material.

In another implementation of the first aspect, the sheet may have a width from 3 cm to 30 cm and a thickness from 0.3 cm to 5 cm.

In another implementation of the first aspect, the filtration step may be performed using a heated screw-type filter, and the filter mesh has a mesh number from 16 to 80.

In another implementation of the first aspect, the heated screw-type filter may provide a heating temperature from 130°C to 180°C.

In another implementation of the first aspect, the recycled textile product may include the fabric material and the plastic material, the fabric material may include: natural fibers including plant fibers having cotton, kapok, linen, hemp, and jute; animal fibers including cultivated silk, tussah silk, wool, cashmere, angora, and camel hair; mineral fibers including asbestos; man-made fibers including regenerated fibers having Tencel and mineral fibers; semi-synthetic fibers including cellulose diacetate and cellulose triacetate; synthetic fibers including Polyethylene (PE), Polyester (PET), Polystyrene (PS), Polyvinyl alcohol (PVA), Ethylene vinyl acetate (EVA), Polymethyl methacrylate (PMMA), Polylactic acid (PLA), Polyformaldehyde (POM), Plastarch material (PSM), Polypropylene (PP), Polyvinyl chloride (PVC), Polytetrafluoroethylene (PTFE), Polyamide (PA), Aramid, Polyvinylidene cyanide, Polyvinylidene chloride, and Polyurea; inorganic fibers including silicone rubber; or any combination thereof; and the plastic material composited with the fabric material may include: Polyvinyl chloride (PVC), Thermoplastic elastomer (TPE), Thermoplastic polyurethane (TPU), Thermoplastic olefin (TPO), Polyurethane (PU), Polyamide (PA), Polyethylene (PE), Polyester (PET), Polymethyl methacrylate (PMMA), Polypropylene (PP), Ethylene vinyl acetate (EVA), Polycarbonate (PC), Polytetrafluoroethylene (PTFE), Polyvinyl alcohol (PVA), Polylactic acid (PLA), Polyformaldehyde (POM), Polystyrene (PS), Plastarch material (PSM), Polybutadiene rubber (BR), Styrene-butadiene rubber (SBR), Nitrile butadiene rubber (NBR), Chloroprene rubber (CR), Sodium rubber, Ethylene propylene diene monomer rubber (EPDM), Polysulfide rubber, Acrylic rubber, Fluororubber (FKM), Silicone rubber, Butyl rubber (IIR), Polyisoprene rubber, Chlorosulfonated polyethylene (CSM), Fluorosilicone rubber (FVMQ), Hydrogenated nitrile butadiene rubber (HNBR), Acrylonitrile butadiene carboxy monomer rubber (XNBR), or any combination thereof.

The second aspect of the present disclosure provides a processed material that is manufactured by the method of the first aspect of the present disclosure.

The third aspect of the present disclosure provides a system for physical recycling and reutilization of textile products, including: a shredding device configured to shred a recycled textile product at a rotational speed from 400 rpm to 1000 rpm to form a shredded material; a separation device connected to the shredding device and configured to remove impurities from the shredded recycled textile product, the separation device including a mechanical vibrating sieve and a magnet; a mixing device configured to perform stretching and shearing on the shredded material and to fuse the shredded material to form a fused material; a closed device configured to stir the fused material under a pressure o from 1500 kgf to 3000 kgf and at a temperature from 120°C to 230°C for 3 minutes to 30 minutes to form a molten material; a forming device including a plurality of rollers configured to roll the molten material into a sheet through the plurality of rollers; and a filtration device configured to melt the sheet and including a filter mesh, the filter mesh configured to remove impurities from the melted sheet to form a processed material.

### BRIEF DESCRIPTION OF THE DRAWINGS

The drawings provided illustrate implementations of the present disclosure and form part of this specification. Along with the written description, the drawings serve to explain exemplary implementations of the present disclosure. It is evident that the drawings described below represent only some implementations of the present disclosure. One with ordinary skill in the art would derive other drawings based on these illustrations without requiring inventive effort. Throughout all drawings, the same reference numerals denote similar, though not necessarily identical, elements.
FIG. 1 is a flow chart illustrating a method for physical recycling and reutilization according to an implementation of the present disclosure.
FIG. 2 is a block diagram illustrating a system for physical recycling and reutilization according to an implementation of the present disclosure.

### DETAILED DESCRIPTION

To further clarify the purpose, technical solutions, and advantages of the present disclosure, a detailed description is provided below in conjunction with the accompanying drawings. It is important to note that the described implementations represent only a subset of possible implementations and do not encompass all potential implementations. Any other implementations that may be derived by one with ordinary skill in the art without requiring inventive effort, based on the disclosed implementations, are considered within the scope of the present disclosure.

In the present disclosure, the term "plurality" refers to two or more, unless otherwise specified. The term "and/or" denotes an associative relationship, encompassing any one of the listed elements as well as all possible combinations. Additionally, the "/" symbol generally indicates an "or" relationship between the preceding and following elements.

Unless otherwise specified, the terms "first," "second," etc., are used solely to distinguish between similar elements and do not imply any specific order, priority, or importance. These terms may be used interchangeably under appropriate circumstances, allowing for implementations beyond those explicitly described or illustrated.

Furthermore, the terms "include" and "have," along with their variations, indicate non-exclusive inclusion. For example, a process, method, system, product, or device that includes a series of steps or components is not necessarily limited to those explicitly listed but may also incorporate additional steps or components, whether explicitly mentioned or inherent to the described process, method, system, product, or device.

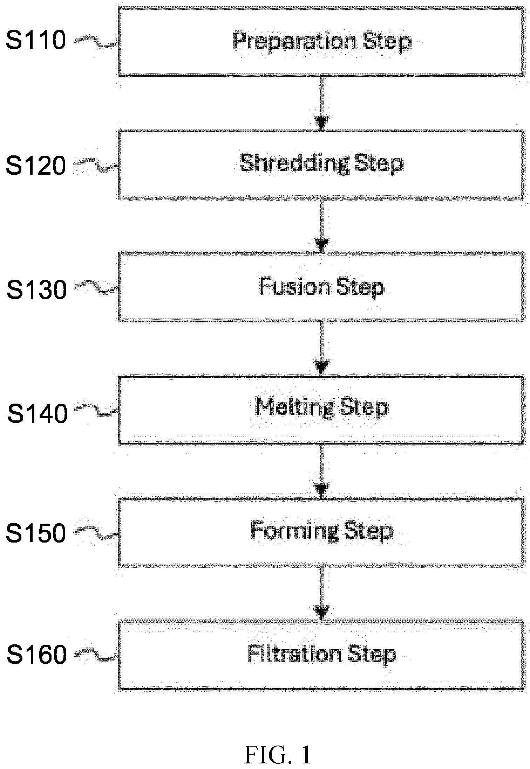

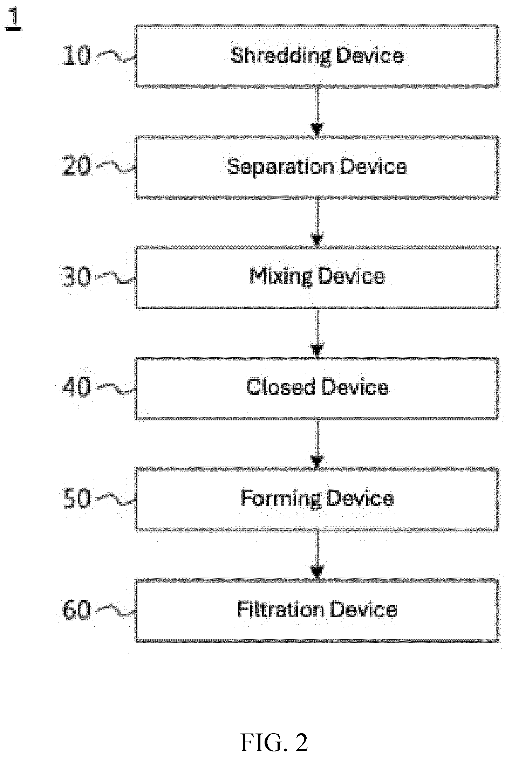

FIG. 1 is a flow chart illustrating a method for physical recycling and reutilization according to an implementation of the present disclosure. FIG. 2 is a block diagram illustrating a system for physical recycling and reutilization according to an implementation of the present disclosure.

Refer to FIG. 1 in conjunction with FIG. 2. The method for physical recycling and reutilization of the present disclosure may effectively recycle waste textile products to produce a processed material through physical recycling and reutilization, while effectively reducing carbon emission during the process. The method for physical recycling and reutilization includes a preparation step S110, a shredding step S120, a fusion step S130, a melting step S140, a forming step S150, and a filtration step S160. The system for physical recycling and reutilization 1 includes a shredding device 10, a separation device 20, a mixing device 30, a closed device 40, a forming device 50, and a filtration device 60.

The preparation step S110: Providing a recycled textile product. First, selection and classification are performed. More specifically, the selection and classification involve manually selecting and cutting off additional objects from the recycled textile product (such as zippers, metal parts, fasteners, etc.).

In one implementation, the recycled textile product may be a textile product made from a combination of fabric and plastic materials, such as clothing, towels, bed sheets, hats, bags, etc. The fabric material may be: natural fibers including plant fibers, such as cotton, kapok, linen, hemp, and jute; animal fibers including cultivated silk, tussah silk, wool, cashmere, angora, and camel hair; mineral fibers including asbestos; man-made fibers including regenerated fibers, such as Tencel and mineral fibers; semi-synthetic fibers including cellulose diacetate and cellulose triacetate; synthetic fibers including Polyethylene (PE), Polyester (PET), Polystyrene (PS), Polyvinyl alcohol (PVA), Ethylene vinyl acetate (EVA), Polymethyl methacrylate (PMMA), Polylactic acid (PLA), Polyformaldehyde (POM), Plastarch material (PSM), Polypropylene (PP), Polyvinyl chloride (PVC), Polytetrafluoroethylene (PTFE), Polyamide (PA), Aramid, Polyvinylidene cyanide, Polyvinylidene chloride, and Polyurea; inorganic fibers including silicone rubber; or any combination thereof. The plastic material composited with the fabric material may be: Polyvinyl chloride (PVC), Thermoplastic elastomer (TPE), Thermoplastic polyurethane (TPU), Thermoplastic olefin (TPO), Polyurethane (PU), Polyamide (PA), Polyethylene (PE), Polyester (PET), Polymethyl methacrylate (PMMA), Polypropylene (PP), Ethylene vinyl acetate (EVA), Polycarbonate (PC), Polytetrafluoroethylene (PTFE), Polyvinyl alcohol (PVA), Polylactic acid (PLA), Polyformaldehyde (POM), Polystyrene (PS), Plastarch material (PSM), Polybutadiene rubber (BR), Styrene-butadiene rubber (SBR), Nitrile butadiene rubber (NBR), Chloroprene rubber (CR), Sodium rubber, Ethylene propylene diene monomer rubber (EPDM), Polysulfide rubber, Acrylic rubber, Fluororubber (FKM), Silicone rubber, Butyl rubber (IIR), Polyisoprene rubber, Chlorosulfonated polyethylene (CSM), Fluorosilicone rubber (FVMQ), Hydrogenated nitrile butadiene rubber (HNBR), Acrylonitrile butadiene carboxy monomer rubber (XNBR), or any combination thereof.

In one implementation, the material of the recycled textile product may be a composition containing Polyester amide, Polyester, Polyvinyl chloride, Polyurethane, or Thermoplastic polyurethane.

Next, the types of plastic materials bonded to the recycled textile product may be identified for classification purposes. In one implementation, spectroscopic instruments (such as Fourier-transform infrared spectroscopy, FTIR) may be used to identify the types of plastic materials bonded to the recycled textile product. That is, the spectroscopic instrument utilizes the principle that different materials produce different spectra for sorting, categorizing recycled textile products with the same plastic material into the same class to facilitate subsequent processing.

The shredding step S120: The classified recycled textile products are placed into a shredding device 10, which shreds the recycled textile products at a rotational speed from 400 rpm to 1000 rpm to form a shredded material. This shredded material may include a mixture of fabric and plastic materials. As mentioned above, the rotational speed range of 400 rpm to 1000 rpm is the preferred implementation for the shredding device 10 of the present disclosure. When the speed is below 400 rpm, the shredding step becomes inefficient, making it difficult to cut the recycled textile products. Conversely, speeds exceeding 1000 rpm may cause excessive fragmentation, leading to lightweight particles floating due to static electricity. The upward movement of these particles results in insufficient material feeding, which negatively impacts subsequent processing. The shredded material typically has an area ranging from 0.08 cm² to 8cm². For fabrics of varying thicknesses and compositions, adjusting the rotational speed allows for more effective shredding.

In one implementation, the shredding device may further include a separation device 20, used to preliminarily remove impurities (such as metal) generated during the shredding step S120 from the shredded material. Furthermore, the impurities in the shredded material are the impurities contained in the mixture of fabric and plastic materials. The separation device 20 includes a mechanical vibrating sieve and a magnet. The mechanical vibrating sieve and magnet of the separation device 20 are used to remove impurities (such as metal) that are not part of the fabric and plastic materials.

The fusion step S130: The shredded material is placed in a mixing device 30. In the implementation of the present disclosure, the mixing device 30 is a heated screw machine that utilizes high temperatures from 120°C to 230°C and pressure from 10 kgf to 50 kgf to perform stretching and shearing, thus enabling preliminary fusion of the shredded material. That is, the mixture of fabric and plastic materials undergoes initial fusion to form a fused material. As mentioned above, the pressure range of 10 kgf to 50 kgf is the preferred implementation range for the mixing device 30 of the present disclosure. When the pressure is below 10 kgf, the shredded material becomes difficult to fuse. Conversely, when the pressure exceeds 50 kgf, the material rapidly forms an irregular shape. The rapid surface melting prevents the interior from fully reaching a molten state, leading to poor fusion quality. In other words, attempting to fuse a large volume of shredded material at once results in uneven uniformity in the final processed material. Therefore, an initial fusion step is employed to ensure proper bonding of the shredded material.

The melting step S140: The fused material is placed in a closed device 40. In one implementation, the closed device may be a high-speed internal mixer or a kneader. The fused material is stirred for 3 to 30 minutes under high pressure from 1500 kgf to 3000 kgf and high temperature from 120°C to 230°C through the closed device, so that after the fused material is uniformly plasticized, a molten material in a molten state is formed. As mentioned above, the pressure range of 1500 kgf to 3000 kgf is the preferred implementation range for the closed device 40 of the present disclosure. When the pressure is below 1500 kgf, uniform plasticization of the fused material becomes difficult. Conversely, pressure exceeding 3000 kgf negatively affects the properties of the fused material (such as tensile strength) and increases the risk of damage to components within the enclosed device.

In one implementation, the fused material is placed in a closed device 40, which may be a high-speed internal mixer or a kneader. A first material of the same type as the plastic material in the recycled textile product is added to the closed device. The addition of the first material increases the proportion of plastic material in the fused material, thus reducing the presence of fibers that could create breaking points within the plastic material. The fused material may include 5% to 99% of the total weight, while the first material may account for 1% to 95%, thus ensuring that the combined weight proportion reaches 100% after mixing. The closed device applies high pressure from 1500 kgf to 3000 kgf and high temperature from 120°C to 230°C while stirring the fused material and first material for 3 to 30 minutes. This process ensures uniform plasticization, thus resulting in the formation of a molten material in a fully molten state.

In one implementation, the fused material may include 10% to 99% of the total weight, while the first material may account for 1% to 90%, thus ensuring that the combined weight proportion reaches 100% after mixing. In one implementation, the fused material may include 15% to 99% of the total weight, while the first material may account for 1% to 85%. In one implementation, the fused material may include 20% to 99% of the total weight, while the first material may account for 1% to 80%. In one implementation, the fused material may include 25% to 99% of the total weight, while the first material may account for 1% to 75%. In one implementation, the fused material may include 30% to 99% of the total weight, while the first material may account for 1% to 70%. In one implementation, the fused material may include 35% to 99% of the total weight, while the first material may account for 1% to 65%. In one implementation, the fused material may include 40% to 99% of the total weight, while the first material may account for 1% to 60%. In one implementation, the fused material may include 45% to 99% of the total weight, while the first material may account for 1% to 55%. In one implementation, the fused material may include 50% to 99% of the total weight, while the first material may account for 1% to 50%. In one implementation, the fused material may include 55% to 99% of the total weight, while the first material may account for 1% to 45%. In one implementation, the fused material may include 60% to 99% of the total weight, while the first material may account for 1% to 40%. In one implementation, the fused material may include 65% to 99% of the total weight, while the first material may account for 1% to 35%. In one implementation, the fused material may include 70% to 99% of the total weight, while the first material may account for 1% to 30%. In one implementation, the fused material may include 75% to 99% of the total weight, while the first material may account for 1% to 25%. In one implementation, the fused material may include 80% to 99% of the total weight, while the first material may account for 1% to 20%. In one implementation, the fused material may include 85% to 99% of the total weight, while the first material may account for 1% to 15%. In one implementation, the fused material may include 90% to 99% of the total weight, while the first material may account for 1% to 10%.

In one implementation, a second material may be added to the molten material. This second material is a gelling promoter, and the weight proportion of the gelling promoter added is 5% to 10% of the weight of the molten material. Adding a gelling promoter to the molten material may enhance the uniformity of the molten material and prevent stratification. In one implementation, the gelling promoter is a stearate.

The forming step S150: The molten material in a molten state is placed in a forming device 50, which is equipped with multiple rollers. Through these rollers of the forming device, the molten material is rolled and kneaded into a sheet. The width of the sheet is from 3 cm and 30 cm, and the thickness ranges from 0.3 cm to 5 cm, thus allowing the sheet to conform to the size of the feed inlet of the filtration device.

In one implementation, the molten material in a molten state is placed in a forming device 50, where further color adjustment is performed. The forming device is equipped with multiple rollers. After placing the molten material in the forming device, color masterbatch, colorant, color powder, or color cake is added to the forming device. Through the rollers of the forming device, the molten material that is combined with the color masterbatch, colorant, color powder, or color cake are rolled to complete the color adjustment. During the color adjustment process, through these rollers of the forming device, the molten material is adjusted and kneaded into a sheet with a width from 3 cm and 30 cm and a thickness from 0.3 cm to 5 cm.

The filtration step S160: A filtration device 60 is used to filter the sheet after the sheet is heated and melted. In one implementation, the filtration device is a heated screw-type filter, which includes a filter mesh with a mesh number ranging from 16 to 80. The filter mesh removes impurities (such as metal) from the melted sheet, preventing the impurities (such as metal) from damaging laminating machines, pressing machines, or calendering machines during subsequent processing of the melted sheet. The melted sheet, after the completion of filtration, becomes a processed material. The processed material may undergo further processing using equipment, such as laminating machines, pressing machines, or calendering machines. The processed material may be combined with a new fabric through bonding, coating, or laminating, or applied to processing areas, such as plastic leather or plastic injection molding. The processed material may also be further manufactured into products, such as waterproof bags, soft water buckets, soft water tanks, waterproof backpacks, or inflatable mattresses. Additionally, the processed material may be used for foam processing, turning into products, such as floor mats, yoga mats, protective gear, shoe materials, or packaging materials.

In one implementation, the physical properties of the processed material manufactured by the method of the present disclosure (also referred to as Nucycle recycled material herein) were tested. The physical property tests included tensile strength, tear strength, high frequency, and water pressure. The physical property results of the Nucycle recycled material were compared with commercial bag material standards.

Table 1 shows the comparison results between Nucycle recycled material and commercial bag material standards.

**Table 1**

| | Commercial bag material standards | Nucycle recycled material |
|---|---|---|
| Tensile strength ISO 1421 (N) | 1000 | 1638 |
| Tear strength ISO 4674 A1 (N) | 60 | 91 |
| High frequency FS191 a Method 5970 (N/3cm) | 200 | 407 |
| Water pressure IOS 811 (mmH₂O) | 10000 | 20000 |

As shown in Table 1, the tensile strength, tear strength, high frequency, and water pressure test results of the Nucycle recycled material are all higher than the commercial bag material standards. The results indicate that the performance of the processed material manufactured by the method of the present disclosure is superior to that of the commercial bag material standards.

In one implementation, a comparison was made between the carbon emissions of the processed material produced by virgin TPU processing and the processed material manufactured by the method of the present disclosure.

Table 2 presents the comparison results of the carbon emissions between the processed material produced by virgin TPU processing and the processed material manufactured by the method of the present disclosure.

**Table 2**

| | Virgin TPU processing | Method of the present disclosure |
|---|---|---|
| Carbon emissions eCO₂ Kg/yard | 4020 | 3479 |

As shown in Table 2, the processed material manufactured by the method of the present disclosure reduces carbon emissions by 13.5% compared to processed material manufactured using virgin TPU processing. In the method for physical recycling and reutilization of the present disclosure, physical and mechanical treatments are applied to recycled textile products without involving extensive chemical reactions (for example, no depolymerization solutions for chemical reactions or modifications to recycled textile products are required during the recycling process). That is, during the processing, large quantities of chemical reagents and equipment, such as chemical reaction tanks, are not needed, which reduces carbon emissions associated with chemical production, transportation, and additional machine operations. Furthermore, the method for physical recycling and reutilization of the present disclosure places greater emphasis on the reuse and maximization of recycled textile products to achieve efficient resource recovery. This method reduces the demand for new raw materials (such as virgin TPU), further lowering carbon emissions. In summary, the processed material manufactured using the method of the present disclosure reduces carbon emissions by 13.5% compared to processed material manufactured using virgin TPU processing. The method not only helps reduce the consumption of petroleum-related products and effectively utilizes recycled textile products, but also helps reduce environmental pollution and mitigate the effects of climate change. In conclusion, the processed material manufactured by the method of the present disclosure not only performs better than commercial bag material standards but also contributes to achieving sustainable development and environmental protection goals.

Referring to FIG. 2, the system 1 for physical recycling and reutilization of the present disclosure includes a shredding device 10, a separation device 20, a mixing device 30, a closed device 40, a forming device 50, and a filtration device 60. When implementing the system for physical recycling and reutilization 1 of the present disclosure, first, a recycled textile product is prepared, which is a textile product made from the combination of fabric and plastic materials. Next, the recycled textile product is placed into the shredding device 10, and the shredding device 10 shreds the recycled textile product at a rotational speed from 400 rpm to 1000 rpm to form a shredded material. The shredded material is a mixture of fabric and plastic materials. In one implementation, the shredding device may further include a separation device 20 used to preliminarily remove impurities (such as metal) that are generated in the shredded material during the process of shredding the recycled textile products. Furthermore, the impurities in the shredded material are the impurities contained in the mixture of fabric and plastic materials. The separation device 20 includes a mechanical vibrating sieve and a magnet. The mechanical vibrating sieve and the magnet of the separation device are used to remove impurities (such as metal) that are not part of the fabric and plastic materials.

Next, the shredded material is placed in a mixing device 30. In the implementation of the present disclosure, the mixing device 30 is a heated screw machine that utilizes a high temperature from 120°C to 230°C and a pressure from 10 kgf to 50 kgf to perform stretching and shearing on the shredded material, thus enabling preliminary fusion of the shredded material to form a fused material.

Then, the fused material is placed in a closed device 40. In one implementation, the closed device may be a high-speed internal mixer or a kneader. The closed device stirs the fused material for 3 to 30 minutes under a high pressure from 1500 kgf to 3000 kgf and a high temperature from 120°C to 230°C, so that after the fused material is uniformly plasticized, a molten material in a molten state is formed.

Next, the molten material in a molten state is placed into a forming device 50. The forming device is equipped with multiple rollers. Through the rollers of the forming device, the molten material is rolled and kneaded into a sheet with a width from 3 cm to 30 cm and a thickness from 0.3 cm to 5 cm, so that the sheet may conform to the size of the feed inlet of the filtration device.

Finally, a filtration device 60 is used to filter the sheet after the sheet is heated and melted. In one implementation, the filtration device is a heated screw-type filter, which includes a filter mesh with a mesh number from 16 to 80. The filter mesh filters out impurities (such as metal) from the melted sheet, thus preventing excess impurities (such as metal) from damaging laminating machines, pressing machines, or calendering machines during subsequent processing of the melted sheet. The melted sheet, after the completion of filtration, becomes a processed material. The processed material may undergo further processing using equipment, such as laminating machines, pressing machines, or calendering machines. The processed material may be combined with a new fabric through bonding, coating, or laminating, or applied to processing areas, such as plastic leather or plastic injection molding. The processed material may also be further manufactured into products, such as waterproof bags, soft water buckets, soft water tanks, waterproof backpacks, or inflatable mattresses. Additionally, the processed material may be used for foam processing, turning into products such as floor mats, yoga mats, protective gear, shoe materials, or packaging materials.

Therefore, through the method of the present disclosure, textiles made of various types of fabric materials and plastic materials may be recycled, not limited to the recycling of a single material. Moreover, through physical recycling methods, more energy may be saved and environmental protection achieved compared to chemical decomposition methods. The physical properties of the recycled materials are not impaired, and the method achieves recycling and reuse. The final product of the present disclosure, namely the processed material, may be directly used as a finished product after completion. Furthermore, the processed material may be directly input into the next stage of the process flow to manufacture related application products, without the need, as in prior technologies, of subjecting the obtained and processed raw materials to a raw material remanufacturing step in order to produce products. Additionally, since the present disclosure does not involve chemical depolymerization steps, the number of operational machines deployed in the overall system would be fewer than the number of machines deployed in general recycling processes using the chemical depolymerization. This method indirectly saves factory layout space and overall energy consumption, and relatively saves overall cost expenditure, thus indeed achieving the purpose of the present disclosure.

However, the above description is only an implementation of the present disclosure and should not be used to limit the scope of implementation of the present disclosure. All simple equivalent changes and modifications made according to the scope of the present disclosure and the content of the specification of the present disclosure still fall within the scope covered by the present disclosure.

## Claims

1. A method for physical recycling and reutilization of a textile product, comprising:
a preparation step, wherein a recycled textile product is provided, the recycled textile product comprising a fabric material and a plastic material;
a shredding step, wherein the recycled textile product is shredded at a rotational speed from 400 rpm to 1000 rpm to form a shredded material;
a fusion step, wherein the shredded material is subjected to stretching and shearing, and the shredded material is fused to form a fused material;
a melting step, wherein the fused material is stirred under a pressure from 1500 kgf to 3000 kgf and at a temperature from 120°C to 230°C for 3 minutes to 30 minutes to form a molten material;
a forming step, wherein the molten material is rolled into a sheet; and
a filtration step, wherein the sheet is heated, melted and then filtered through a filter mesh to remove impurities and form a processed material.

2. The method of claim 1, wherein the shredding step further comprises removing impurities generated during shredding the recycled textile product through a mechanical vibrating sieve and a magnet, and the impurities comprise metal.

3. The method of claim 1, wherein the shredded material has an area from 0.08 cm² to 8 cm².

4. The method of claim 1, wherein the melting step comprises adding a first material, and the first material is identical to the plastic material in the recycled textile product.

5. The method of claim 1, wherein the mixing device fuses the shredded material at a temperature from 120°C to 230°C and under a pressure from 10 kgf to 50 kgf.

6. The method of claim 1, wherein the forming step comprises a color adjustment of the molten material.

7. The method of claim 1, wherein the sheet has a width from 3 cm to 30 cm and a thickness from 0.3 cm to 5 cm.

8. The method of claim 1, wherein the filtration step is performed using a heated screw-type filter, and the filter mesh has a mesh number from 16 to 80.

9. The method of claim 8, wherein the heated screw-type filter provides a heating temperature from 130°C to 180°C.

10. The method of claim 1, wherein the recycled textile product comprises the fabric material and the plastic material, the fabric material comprises: natural fibers comprising planet fibers including cotton, kapok, linen, hemp, and jute; animal fibers comprising cultivated silk, tussah silk, wool, cashmere, angora, and camel hair; mineral fibers comprising asbestos; man-made fibers comprising regenerated fibers including Tencel and mineral fibers; semi-synthetic fibers comprising cellulose diacetate and cellulose triacetate; synthetic fibers comprising Polyethylene, Polyester, Polystyrene, Polyvinyl alcohol, Ethylene vinyl acetate, Polymethyl methacrylate, Polylactic acid, Polyformaldehyde, Plastarch material, Polypropylene, Polyvinyl chloride, Polytetrafluoroethylene, Polyamide, Aramid, Polyvinylidene cyanide, Polyvinylidene chloride, and Polyurea; inorganic fibers including silicone rubber; or any combination thereof; and the plastic material composited with the fabric material comprises: Polyvinyl chloride, Thermoplastic elastomer, Thermoplastic polyurethane, Thermoplastic olefin, Polyurethane, Polyamide, Polyethylene, Polyester, Polymethyl methacrylate, Polypropylene, Ethylene vinyl acetate, Polycarbonate, Polytetrafluoroethylene, Polyvinyl alcohol, Polylactic acid, Polyformaldehyde, Polystyrene, Plastarch material, Polybutadiene rubber, Styrene-butadiene rubber, Nitrile butadiene rubber, Chloroprene rubber, Sodium rubber, Ethylene Propylene diene monomer rubber, Polysulfide rubber, Acrylic rubber, Fluororubber, Silicone rubber, Butyl rubber, Polyisoprene rubber, Chlorosulfonated polyethylene, Fluorosilicone rubber, Hydrogenated nitrile butadiene rubber, Acrylonitrile butadiene carboxy monomer rubber, or any combination thereof.

11. A processed material that is manufactured by the method of any one of claims 1 to 10.

12. A system for physical recycling and reutilization of a textile product, comprising:
a shredding device (10) configured to shred a recycled textile product at a rotational speed from 400 rpm to 1000 rpm to form a shredded material;
a separation device (20) connected to the shredding device (10) and configured to remove impurities generated during shredding the recycled textile product, the separation device (20) comprising a mechanical vibrating sieve and a magnet;
a mixing device (30) configured to perform stretching and shearing on the shredded material and to fuse the shredded material to form a fused material;
a closed device (40) configured to stir the fused material under a pressure from 1500 kgf to 3000 kgf and at a temperature from 120°C to 230°C for 3 minutes to 30 minutes to form a molten material;
a forming device (50) comprising a plurality of rollers configured to roll the molten material into a sheet through the plurality of rollers; and
a filtration device (60) configured to melt the sheet and comprising a filter mesh, the filter mesh configured to remove impurities generated during melting the sheet to form a processed material.
